# EUROPEAN PATENT APPLICATION

(11) **EP 2 207 109 A1**
(43) Date of publication of application: **14.07.2010**
(21) Application number: 09290008.3
(22) Date of filing: 07.01.2009
(51) Int. Cl.: G06F 17/30

(54) **Method for browsing multimedia content associated to objects, a related browsing device, a related set resolving server, and a related content mapping server**

(71) Applicant: Alcatel Lucent, 75008 Paris (FR)
(72) Inventor: Trappeniers, Lieven, 2200 Herentals (Noorderwijk) (BE); Lou, Zhe, 2000 Antwerp (BE)
(74) Representative: Narmon, Gisèle Marie Thérèse

(57) **Abstract**

The present invention relates to a Method for browsing multimedia content associated to objects, a related browsing device, a related Set Resolving Server, and a related Content Mapping Server for browsing multimedia content associated to objects, where the objects form part of a set of related objects of a plurality of objects and each object of the plurality of objects being associated with a tag that contains a tag-identifier.

First a server device in a first action retrieves at least one of a tag-identifier of a first object of the set of related objects and a criterion associated with the set of related objects and subsequently a server device determines all objects of the plurality of objects forming part of the set of related objects, based on at least one of a tag-identifier of a first object of the set of related objects and a criterion associated with the set of related objects. Then the content mapping server resolves a multimedia content mapping for each object of the set of related objects based on a tag-identifier of each object of the set of objects and the criterion associated with the set of related objects. Finally the content resolving server resolves the multimedia content that is associated to each object of the set of objects using multimedia content mapping for each object of the set of related objects.

The resolved multimedia content subsequently is forwarded towards the browsing device for presenting the resolved multimedia content.

## Description

The present invention relates to a Method for browsing multimedia content associated to objects as described in the preamble of claim 1 and a related browsing device as described in the preamble of claim 4.

Such a subject is already known in the art, e.g. from "P. (2006). Hovering: Visualizing RFID Hyperlinks in a Mobile Phone. Mobile Interaction with the Real World (MIRW 2006), Espoo, Finland by Valkkynen"

Therein, the physical browsing is described where the user can access information or services related to an object by physically selecting the object itself, for example by touching or pointing at the object. The enabling technology for this is tags that contain the information - for example a Universal Resource Locator URL - related to the object to which it is attached. A tagged physical environment can be seen as analogous to a WWW page. It contains *physical hyperlinks* to different services and the user can 'click' these links with a mobile terminal in the same way desktop WWW links can be selected with a mouse.

The basic sequence of touch-based mobile interaction with physical hyperlinks is that the user brings the mobile terminal close to the link, after which the terminal reads the contents of the link and displays it to the user. In hovering, the user can 'hover' the mobile terminal over a link similarly to how hovering works in desktop web. In desktop web browser, when the pointer is hovering over a link, additional information about the link typically is displayed. The browser usually displays the address the link leads to in the status bar and if the link has a title, it is displayed as a tooltip next to the link. In this mobile phone based hovering, the link information is displayed in the mobile phone screen before the link is actually selected and activated. This way the user can quickly check the contents of several links before actually selecting any of them.

For Tangible Interactions (for example based on NFC) with objects (for example smart posters), the hovering concept was explored [Valkkynen] from a HCI (Human Computer Interaction) and visualization perspective. Users can wave their mobile phone over a multitude of NFC tags and are presented with visual feedback about the content (URL) of the physical hyperlink.

The problem of this object browsing method is that the use of an URL as a link to data or service is very statically and hence inflexible as only one single URL can be addressed.

Furthermore the object browsing method of the prior art is too slow in terms of responsiveness with respect to retrieval of the associated data as for each selected object, i.e. hovered object all respective data is to be retrieved which depending on the connection takes some time.

An object of the present invention is to provide an object browsing method of the above known type but wherein the flexibility of addressing information or services has increased and responsiveness of information retrieval is improved substantially.

According to the present invention, this object is achieved by the Method for browsing multimedia content associated to objects according to claim 1, a related browsing device according to claim 4, a Server Device according to claim 6 or 7 and a Content Mapping Server according to claim 8.

Indeed by in a first action retrieving at least one of a tag-identifier of a first object of the set of related objects and a criterion associated with this set of related objects, all objects of said plurality of objects forming part of said set of related objects can be determined using this at least one of a tag-identifier of a first object of the set of related objects and a criterion associated with the set of related objects.

Subsequently, for all objects of the set of related objects, a multimedia content mapping for each object of the set of related objects is resolved based on the tag-identifier of each object of the set of objects in combination with the criterion associated with the set of related objects.

Such a criterion may be the physical location of a first tag and the other tags of the set of related tags (e.g. all tags on the city-map), or such a criterion may be an application type that is the same for all tags that are used in the meant application (e.g. all tags belongs to the same application). Alternatively the criterion may be a pre-provisioned relation (e.g. all tags of a set of related tags belonging to the same city-game), or even another criterion may be applied.

Such criterion may be used for selecting a data set from a multiple of data-sets that may apply to each set of objects like a data-set corresponding to all normal highlights of a city and the second data-set that corresponds to a relevant event in the city with other data assigned to each object of the set of objects.

This tag-identifier may be any kind of tag or uniquely identifying the object to which the tag is attached. Such a tag for instance may be an RFID-tag or a NFC-tag a ID or, 2D or dimensional barcode or even be visible text/characters on the object, a picture of the object itself, a graphical marker containing encoded information.

It is further to be noted, that in entire text, the phrases "tag" or "tag-identifier" refer to and are meant to be understood as: all possible object identifiers of a mentioned object. This object-identifier may be any tag with belonging tag-identifier, any kind of barcode, any visible text/characters on the object, a graphical marker containing encoded information or even an object identification obtained by means of image recognition.

Multimedia Content mapping is a mapping of an appropriate multimedia asset identifier like a URI on a tag-identifier where it is taken into account that based on the criterion the appropriate multimedia content item is addressed by the URI, for each object of the set of objects tag.

Such multimedia content may be any combination of video, sound and or text, or multimedia messages. This multimedia content can be delivered as any combination of an on-demand mode, streaming content, a communication session or changing the modility of the delivery (volume, quality, ...).

Another characterizing embodiment of the present invention is disclosed in claim 2.

By subsequently forwarding the multimedia content mapping associated with each object of the group of objects to the browsing device and the browsing device, based on the mapping of a multimedia content item to each tag of the set of associated tags fully or partially retrieving the multimedia content items, the browsing device has the full, or partial information on each object of the set of related objects at its disposal in advance before browsing any of the further object of the set of related objects. When the user browses a further object of the set of related objects respectively, the preview or the full multimedia content item related to the browsed object is immediately presented at the browsing device as the multimedia content item is available already.

Another characterizing embodiment of the present invention is disclosed in claim 3.

By a content resolving server subsequently resolving the multimedia content associated to each object of the group of objects based on the multimedia content mapping associated to each object of the group of objects and forwarding the multimedia content associated to each object of the group of objects fully or partially to the browsing device, the browsing device has respectively the full, or partial information on each object of the set of related objects at its disposal in advance before browsing any of the further object of the set of related objects. When the users browses a further object of the set of related objects the preview or the full multimedia content item related to the browsed object is immediately presented at the browsing device.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

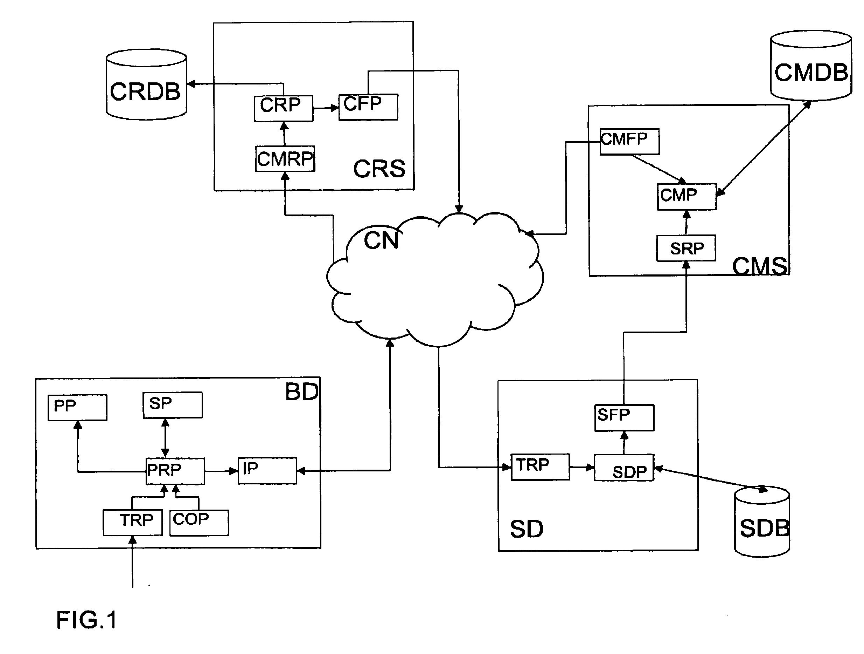

Fig. 1 represents a the functional representation of a communications system for applying the method for browsing multimedia content associated to objects in accordance with the present invention. This figure includes the functional built-up of the relevant devices of the present invention, i.e. the browsing device BD, the server device SD, the content mapping server CMS and the content resolving server CRS.

In the following paragraphs, referring to the drawings, an implementation of the Method for browsing content related to an object a related system, a related browsing device BD and a related content resolving server CRS are mentioned in the appended claims according to the present invention will be described.

In the first paragraph of this description the main elements of the communications system as presented in FIG. 1 are described. In the second paragraph, all connections between the before mentioned elements and described means are defined. Subsequently all relevant functional means of the browsing device BD, the server device SD, the content mapping server CMS and the content resolving server CRS are described followed by a description of all interconnections. In the succeeding paragraph the actual execution of the method for browsing content related to an object is described.

A first essential element of the present invention is the browsing device BD for browsing multimedia content associated to objects, where these objects form part of a set of related objects of a plurality of objects. The browsing device may be a mobile phone with NFC reader, the mobile phone working according any mobile communications standard like e.g. GSM, UMTS, WIFI etc. and having internet access working according to the GPRS standard or any other. Alternatively this browsing device may be a fixed communications device with any tag reader like NFC, RFID, barcodes or having image recognition facilities.

Further, there is a Server Device SD for supporting the browsing of multimedia content associated to objects and where the Server Device SD determines all objects of the plurality of objects forming part of the set of related objects, based on at least one of a tag-identifier of a first object of the set of related objects and a criterion associated with the set of related objects.

In addition there is a Content Mapping Server CMS for resolving a multimedia content mapping for each object of the set of related objects based on a tag-identifier of each object of the set of objects in combination with the criterion associated with the set of related objects and in where the set of related objects is determined by the Server Device SD.

Further there is the content resolving server CRS that is able at request of the browsing device BD to resolve a multimedia content item associated with an object based on a multimedia content mapping for each object of a set of related objects where the multimedia content mapping is the mapping of a tag-identifier attached to an object on an identifier of a multimedia asset associated with the object. Such an identifier of a multimedia asset may be a Uniform Resource Identifier further referred to as a URI.

The browsing device BD, the server device SD, the content mapping server CMS and the content resolving server CRS are coupled over a communications network CN, in this embodiment being a mobile communications network coupling the browsing device to a fixed communication structure and a connected internet network. In other embodiments any other combination of fixed, mobile and internet networking infrastructure might be used to couple the browsing device BD, the server device SD, the content mapping server CMS and the content resolving server CRS.

The browsing device BD comprises a tag retrieving part TRP that is adapted to retrieve the object-information associated to the interrogated object during an interaction with the object and a criterion obtaining part COP that is adapted to obtain a criterion from a user where the criterion is associated with a set of related objects.

Further, the browsing device comprises a processing part PRP that is able to process all read-tag-identifiers and incoming and outgoing requests.

The browsing device BD based on a obtained tag, i.e. the NFC-code, RFID-tag, the barcode etc, generates a request including the tag towards a server device SD for determining all objects of a plurality of objects forming part of a set of related objects, based on at least one of a tag-identifier of a first object of said set of related objects and a criterion associated with the set of related objects.

The browsing device further comprises a interfacing part IP that is adapted to forward generated requests and receive responses from the respective server device SD, content mapping server CMS and content resolving server CRS.

Additionally, the browsing device BD includes a storing part SP that is adapted to store for each tag-identifier of a set of related objects a corresponding multimedia asset identifier identifying the associated multimedia asset uniquely. Finally the browsing device comprises a presenting part PP that is able to present the received multimedia content asset to the user of the browsing device BD. The multimedia content item may include a picture, a movie, sound and/or text and any combination thereof. The presenting part of the browser device BD may include speakers and a display.

The Server Device SD comprises a tag-identifier receiving Part TRP that is adapted to receive from a browsing device BD in a first action, at least one of a tag-identifier of a first object of said set of related objects and a criterion associated with the set of related objects and a set determining part SDP that is adapted to determine all objects of the plurality of objects forming part of the set of related objects, based on either one or both of a tag-identifier of a first object of the set of related objects and a criterion associated with the set of related objects. The set determining part SDP may be coupled to a database SDB containing groups of related objects together with the corresponding tag-identifier of each object.

The server device SD further comprises a Set forwarding Part SFP that is adapted to forward a list containing all objects of the determined set of related objects.

The Content Mapping Server CMS in turn, comprises a Set Receiving Part SRP that is able to receive a list containing all objects of the determined set of related objects and a content mapping part CMP that is able to resolve a multimedia content mapping for each object of the set of related objects based on a tag-identifier of each object of the set of objects in combination with the criterion associated with the set of related objects and in that the set of related objects is determined by the Server Device SD.
Then the Content Mapping Server CMS comprises a Content Mapping Forwarding Part CMFP that is able to forward the determined content mapping, i.e. a mapping of all tag-identifiers attached to objects of a set of related objects on a multimedia asset identifier, uniquely addressing each of the multimedia assets associated to the respective objects of the set of related objects. The content mapping part CMP may be coupled to a database CMDB for resolving a multimedia content mapping for each object of the set of related objects based on a tag-identifier of each object of the set of objects in combination with the criterion associated with the set of related objects.

The content resolving server CRS, comprises a content mapping receiving part CMRP that is able to receive a content mapping forwarded, containing the mapping of all tag-identifiers attached to objects of a set of related objects on a multimedia asset identifier, where each multimedia asset identifier uniquely addresses each of the multimedia assets associated wit the respective objects of the set of related objects. The content resolving server CRS further comprises the content resolving part CRP that is able to resolve a multimedia asset associated to each object of the set of related objects based on the determined content mapping for each object of the set of related objects based on a tag-identifier the related object of the set of objects. Then the Content resolving server CRS comprises a Content Forwarding Part CFP that is able to forward the determined content for each of the objects of the set of related objects towards the browsing device BD.

The tag retrieving part TRP of the browsing device BD has an input-terminal that is at the same time an input-terminal of the browsing device BD. The tag retrieving part is coupled to an input-terminal of the processing part PRP that is coupled with an output-terminal to an input-terminal of the interfacing part IP. Further the criterion obtaining part COP is coupled to the processing part PRP. The criterion obtaining part for instance may obtain input via the keyboard or the touch-screen of the browsing device. The interfacing part IP has an input/output-terminal that is at the same time an input/output-terminal of the browsing device BD and is coupled to the communications network CN. Furthermore the processing part PRP is coupled to the storing part SP and in addition to the presenting part PP.

The tag-identifier receiving Part TRP has an input-terminal that is at the same time an input-terminal of the server device SD. The tag-identifier receiving Part TRP further is coupled to the set determining part SDP that in turn is coupled to the Set forwarding Part SFP that has an output-terminal that is at the same time an output-terminal of the server device SD. The set determining part SDP further is coupled to database SDB over an internal or external communications link.

The Set Receiving Part SRP has an input-terminal that is at the same time an input-terminal of the Content Mapping Server CMS. Further, the Set Receiving Part SRP is coupled to the content mapping part CMP that in turn is coupled to the Content Mapping Forwarding Part CMFP. The Content Mapping Forwarding Part CMFP has an output-terminal that is at the same time an output-terminal of the Content Mapping Server CMS and is further coupled to the communications network CN.

The content mapping part CMP further is coupled to database SDB over an internal or external communications link.

The content mapping receiving part CMRP has an input-terminal that is at the same time an input-terminal of the Content resolving Server CRS. Further, the content mapping receiving part CMRP is coupled to the content resolving part CRP that in turn is coupled to the Content Forwarding Part CFP. The Content Forwarding Part CFP has an output-terminal that is at the same time an output-terminal of the Content Resolving Server CRS and is further coupled to the communications network CN.

In order to explain the operation of the present invention it is assumed that a visitor of Beijing owns a browsing device BD which is a mobile phone like a GSM telephone with a NFC or RFID tag reader. This visitor of Beijing is standing in front of a big city-map looking for interesting places to visit. He hovers (swipes) his mobile phone over regions of the map that look interesting.

Using prior art solutions, these (thumbnail or full screen) pictures would have to be fetched from the network upon reading the RFID tag's content (e.g. an URL). This would introduce a delay of a few seconds (even on 2.5G or 3G networks). Since the hovering experience relies on near-instant responsiveness, this would be a sub-optimal user experience.

In case of the present invention, the proximity of the user to the city-map, i.e. the act of scanning the first tag (which may be the tag of the first object or be tag on the way to the city map detecting proximity of a potential user) results in the start of the download of the "content mapping" between the tags embedded in the map and the related preview content. As such, when the user is hovering the map with his phone, he instantly gets the related pictures on his phone's screen (since they are now available locally at the mobile phone).

When the Beijing visitor reads the first tag on the city-map or alternatively, the visitors proximity is detected as there is a first tag attached along the access road to the big city map that is read by the mobile device of the visitor, his mobile phone BD reads, by means of the tag receiving part TRP the tag-identifier of this first tag and subsequently generates a message towards server device SD by means of the processing part PRP and forwards the message towards server device SD. The server device SD by means of the tag receiving part TRP receives the tag-identifier of the first tag, the set resolving part resolves based on the tag-identifier of the first tag, resolves the tag (either its ID, the URL stored in it or any other content stored in the tag) as to belonging to the Beijing city map and further determines all objects of the plurality of objects forming part of the set of related objects, based on the tag-identifier of a first object of the set of related objects and a criterion associated with the set of related objects. This set of related objects is determined from database SDB that contains the group of related objects associated the corresponding tag-identifier of the first tag coupled to the first attractive site of Beijing or in the alternative, to the first tag attached along the access road to the big city map that is read by the mobile device.

In this embodiment the set of related objects is determined based on the fact that the first tag was a tag at the city-map of Beijing, hence all tags of objects on the city-map of Beijing, having the same physical location (all tags are embedded in the city map), are the objects that belong to this set of related objects. Hence the message of the server device to the content mapping server CMS contains the following tags in the list {tag1, tag2, ...}, and in this way the content mapping server CMS knows which additional tags are embedded in the city-map.

Alternatively this message, containing these tags the following tags in the list {tag1, tag2, ...}, may be sent towards the browsing device BD that processes this list of tag-identifiers of all associated objects of the determined set of related objects, possibly stores it and based on this list of tags of associated objects on the city map of Beijing generates a request destined to the content mapping server CMS for resolving a multimedia content mapping each object of the set of related objects based on the tag (-identifier) of each object of the set of related objects in combination with a criterion associated with the set of related objects.

In alternative embodiments, the objects of such a set of related objects could be determined by the serving device SD based on the application that is used by the user (or BD), the application or communication sessions the user is involved in, the belonging to the same application (e.g. all tags belongs to the same application), a pre-provisioned relation (e.g. belonging to the same city-game), or even another criterion. The Beijing visitor could for example previously have indicated his interest in music. Upon touching the first tag, the BD would then send the tag identifier of the first tag and the criterion "music" to the SD. Subsequently, the SD would only include in the related tag set only those tags that are related to the specified criterion.

Subsequently the, set forwarding Part SFP forwards a list of the tag-identifiers of all associated objects of the determined set of related objects. The content mapping part CMP of the content mapping server CMS then resolves a multimedia content mapping for each object of the set of related objects based on the tag-identifier of each object of the set of related objects in combination with a criterion associated with the set of related objects. Here in this embodiment another criterion may be that the information is used that is associated with the city map of Beijing, being the normal highlights of the city as opposite to for instance all information related to the Olympics of Beijing that could be selected in the alternative.

The CMS resolves the tag (either its ID, the URL stored in it or any other content stored in the tag).

Based on the SD' reply {tag1, tag2, ...}, the CMS knows which additional tags are embedded in the city-map. The content mapping server CMS in the end replies to the first request of the mobile device by sending a data set that describes the mapping of content to this set of tags: {(tag1,URI1), (tag2,URI2),...} to the browsing device BD or alternatively directly to the Content resolving server CRS.

Subsequently, based on this {(tag1,URI1), (tag2,URI2),...} data set, the mobile device resolves by means of the content resolving server CRS and downloads the (preview or full) content related to the URI1, URI2, ...

When, in a next step, the user is hovering the map with his phone, he instantly sees the related pictures on his phone's screen, as they are available locally at the browsing device BD.

In an alternative embodiment, in an interactive museum guide using NFC based touch interaction allows to retrieve more information about pieces of art by touching the signs next to the artwork. The current solution would allow to immediately show a thumbnail of the painting (or the artist) when hovering over the sign. Only when pressing a key, the real multimedia content is downloaded. For this, the client device contains a mapping between the museum's tags and the thumbnails. The download of this content mapping started (as an example) on the moment the tickets were bought (e.g. using NFC based payment).

In an alternative embodiment, besides RFID includes NFC also barcode (1D and 2D) could be applied as an identifier of a tag, dimensional barcode or even be visible text/characters on the object, a picture of the object itself, a graphical marker containing encoded information, or image recognition may be applied in order to obtain a unique object-identification of the interrogated object.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for browsing multimedia content associated to objects, said objects forming part of a set of related objects of a plurality of objects, each object of said plurality of objects being associated with a tag containing a tag-identifier, and said method comprising the steps of:
a. a browsing device (BD) reading a tag-identifier of an object of said plurality of objects; and
b. a content resolving server (CRS) resolving multimedia content associated to said object using said tag-identifier of said tag, **CHARACTERISED IN THAT** said method further comprise the steps of
c. a server device (SD) in a first action retrieving at least one of a tag-identifier of a first object of said set of related objects and a criterion associated with said set of related objects; and
d. said server device (SD) determining all objects of said plurality of objects forming part of said set of related objects, based on said at least one of a tag-identifier of a first object of said set of related objects and a criterion associated with said set of related objects; and
e. a content mapping server (CMS), resolving a multimedia content mapping for each object of said set of related objects based on a tag-identifier of each object of said set of objects and said criterion associated with said set of related objects.

2. Method for browsing objects according to claim 1, **CHARACTERISED IN THAT** said method further comprises the step of:
f. forwarding said multimedia content mapping associated to each object of said group of objects to said browsing device(BD); and
g- said browsing device (BD) based on said mapping of a multimedia content items to each tag of said set of associated tags fully or partially retrieving said multimedia content items from said content resolving server (CRS).

3. Method for browsing objects according to claim 1, **CHARACTERISED IN THAT** said method further comprises the step of a content resolving server (CRS) resolving said multimedia content associated to each object of said group of objects based on said multimedia content mapping associated to each object of said group of objects and forwarding said multimedia content associated to each object of said group of objects fully or partially to said browsing device (BD).

4. Browsing device (BD) for browsing multimedia content associated to objects, said objects forming part of a set of related objects of a plurality of objects, each object of said plurality of objects being associated with a tag containing a tag-identifier, said browsing (BD) device comprising:
a. a tag reading part (TRP) adapted to read a tag-identifier of an object of said plurality of objects during browsing, **CHARACTERISED IN THAT** said browsing device (BD) further comprises:
b. a criterion obtaining part (COP), adapted to obtain a criterion from a user, said criterion being associated with a set of related objects;
c. a processing part (PRP), further adapted to forward at least one of a tag-identifier of a first object of said set of related objects and a criterion associated with said set of related objects.

5. Browsing device (BD) for browsing multimedia content associated to objects, according to claim 4, **CHARACTERISED IN THAT** said processing part (PRP), further is adapted to generate, at receipt of a multimedia content mapping for each object of said set of related objects from a content mapping part server (CMS), a request to a content resolving Server (CRS) for resolving, based on a mapping of a multimedia content item to each tag of said set of associated tags said multimedia content items for each object of said set of related objects.

6. Server Device (SD) for supporting the browsing of multimedia content associated to objects, said objects forming part of a set of related objects of a plurality of objects, each object of said plurality of objects being associated with a tag containing a tag-identifier, **CHARACTERISED IN THAT** said Server Device (SD) comprises:
a. a tag-identifier receiving Part (TRP), adapted to receive from a browsing device (BD), in a first action retrieved at least one of a tag-identifier of a first object of said set of related objects and a criterion associated with said set of related objects; and
b. a set determining part (SDP), adapted to determine all objects of said plurality of objects forming part of said set of related objects, based on said at least one of a tag-identifier of a first object of said set of related objects and a criterion associated with said set of related objects.

7. Server Device (SD) according to claim 5, **CHARACTERISED IN THAT** said Server Device (SD) further comprises:
c. a content mapping part (CMP), adapted to resolve a multimedia content mapping for each object of said set of related objects based on a tag-identifier of each object of said set of objects and said criterion associated with said set of related objects.

8. Content Mapping Server (CMS), for supporting the browsing of multimedia content associated to objects, said objects forming part of a set of related objects of a plurality of objects, each object of said plurality of objects being associated with a tag containing a tag-identifier, **CHARACTERISED IN THAT** said Content Mapping Server (CMS) comprises a content mapping part (CMP), adapted to resolve a multimedia content mapping for each object of said set of related objects based on a tag-identifier of each object of said set of objects in combination with said criterion associated with said set of related objects and **in that** said set of said set of related objects is determined by a Server Device (SD).
